# FASCICULE DE BREVET EUROPEEN

(11) **EP 1 994 724 B1**
(45) Date de publication et mention de la délivrance du brevet: **17.08.2016**
(21) Numéro de dépôt: 07731633.9
(22) Date de dépôt: 15.02.2007
(51) Int. Cl.: H04L 29/12, H04L 29/08, H04L 29/06

(54) **PROCEDE ET SYSTEME DE CARACTERISATION DE NOEUDS DE COMMUNICATION HETEROGENES**
VERFAHREN UND SYSTEM ZUM CHARAKTERISIEREN HETEROGENER KOMMUNIKATIONSKNOTEN
METHOD AND SYSTEM FOR CHARACTERISING HETEROGENEOUS COMMUNICATION NODES

(30) Priorité: 28.02.2006 FR 0650681
(43) Date de publication de la demande: 26.11.2008
(73) Titulaire: Orange, 75015 Paris (FR)
(72) Inventeur: BOUCADAIR, Mohamed, F-14000 Caen (FR); NOISETTE, Yoann, F-14320 May Sur Orne (FR)
(86) Numéro de dépôt international: PCT/FR2007/050808
(87) Numéro de publication internationale: WO 2007/099248

(56) Documents cités:
- EP-A- 1 515 508
- CAMARILLO ERICSSON J ROSENBERG DYNAMICSOFT G: "The Alternative Network Address Types Semantics (ANAT) for the Session Description Protocol (SDP) Grouping Framework; draft-ietf-mmusic-anat-02.txt;" IETF STANDARD-WORKING-DRAFT, INTERNET ENGINEERING TASK FORCE, IETF, CH, vol. mmusic, no. 2, 25 octobre 2004 (2004-10-25), XP015023068 ISSN: 0000-0004
- KAWARASAKI Y ET AL: "IPv4/IPv6 SIP interworking methods in dual-stack network" COMMUNICATIONS, 2003. APCC 2003. THE 9TH ASIA-PACIFIC CONFERENCE ON 21-24 SEPT. 2003, PISCATAWAY, NJ, USA,IEEE, vol. 3, 21 septembre 2003 (2003-09-21), pages 1124-1128, XP010687978 ISBN: 0-7803-8114-9
- BALDI M ET AL: "ALEX: improving SIP support in systems with multiple network addresses" SIGNAL PROCESSING AND INFORMATION TECHNOLOGY, 2005. PROCEEDINGS OF THE FIFTH IEEE INTERNATIONAL SYMPOSIUM ON ATHENS, GREECE DEC. 18 - 21, 2005, PISCATAWAY, NJ, USA,IEEE, 18 décembre 2005 (2005-12-18), pages 164-169, XP010880999 ISBN: 0-7803-9313-9

## Description

L'invention se situe dans le domaine des télécommunications, et plus particulièrement dans celui de la téléphonie sur IP.

Des réseaux conformes à un protocole de communication dit IP (abréviation bien connue de l'homme du métier de l'expression anglaise "Internet Protocol") sont de plus en plus souvent utilisés en tant que supports universels d'une multitude de services et applications. Ce protocole IP a joué un rôle fédérateur auprès de multiples opérateurs qui ont choisi ce protocole pour mutualiser des offres de service jusqu'alors disparates.

IPv4 est une version du protocole de communication IP qui est utilisée depuis des années.

Pour satisfaire des contraintes imposées par de tels services de communication et plus particulièrement pour répondre aux besoins accrus en termes d'adresses, des opérateurs et des constructeurs d'équipements réseau se sont unis pour spécifier un protocole de communication de nouvelle génération, communément référencé IPv6, défini par des spécifications ainsi que des documents d'analyse qui sont à un stade de développement suffisamment avancé pour permettre à présent d'envisager un déploiement opérationnel dans les réseaux des opérateurs.

Néanmoins, l'introduction de cette nouvelle génération de protocole pose des problèmes significatifs liés à un besoin de garantir une interopérabilité et un interfonctionnement du protocole IPv6 et du protocole IPv4 qui est déjà déployé dans les réseaux IP. Dans l'état actuel de la technique des solutions à ces problèmes ont été identifiées, mais elles présentent pour désavantage de ne pas intervenir exclusivement à un niveau "service" (en particulier couche application) mais aussi à un niveau "transport" (couche IP). Dans la couche transport, des mécanismes ont été proposés, voire standardisés à l'IETF (abréviation bien connue de l'homme du métier de l'expression anglaise "Internet Engineering Task Force") tels qu'une technique dite NAT-PT et diverses techniques connues sous le vocable anglais « tunneling » et consistant à encapsuler des données IPv6 dans des datagrammes IPv4 ou inversement.

En outre, des mises à jour et des adaptations d'architectures et de plateformes de services sont nécessaires pour permettre un interfonctionnement entre clients situés dans des environnements IP de nature différente (IPv4 ou IPv6), et ceci d'une manière aussi transparente que possible pour le client final.

Parmi d'autres activités multimédia, l'IETF a standardisé un protocole appelé SIP (abréviation bien connue de l'homme du métier de l'expression anglaise "Session Initiation Protocol") offrant pour principales fonctions l'initiation, la modification et la terminaison de sessions multimédia. Ce protocole SIP constitue un exemple intéressant d'application de la présente invention. Le protocole SIP s'appuie sur un protocole SDP (abréviation bien connue de l'homme du métier de l'expression anglaise "Service Description Protocol") pour produire une description de paramètres relatifs à la session concernée. Une fois une négociation réussie entre deux parties à un appel, ces dernières peuvent échanger des flux média grâce à une activation d'un protocole RTP (abréviation bien connue de l'homme du métier de l'expression anglaise "Real time Transport Protocol"). Des paramètres de sessions RTP sont pré-négociés *via* des messages de signalisation SIP, notamment dans la partie SDP. Ces paramètres sont principalement des adresses de terminaison et des numéros de port qui seront utilisés de part et d'autre d'une liaison de communication à établir.

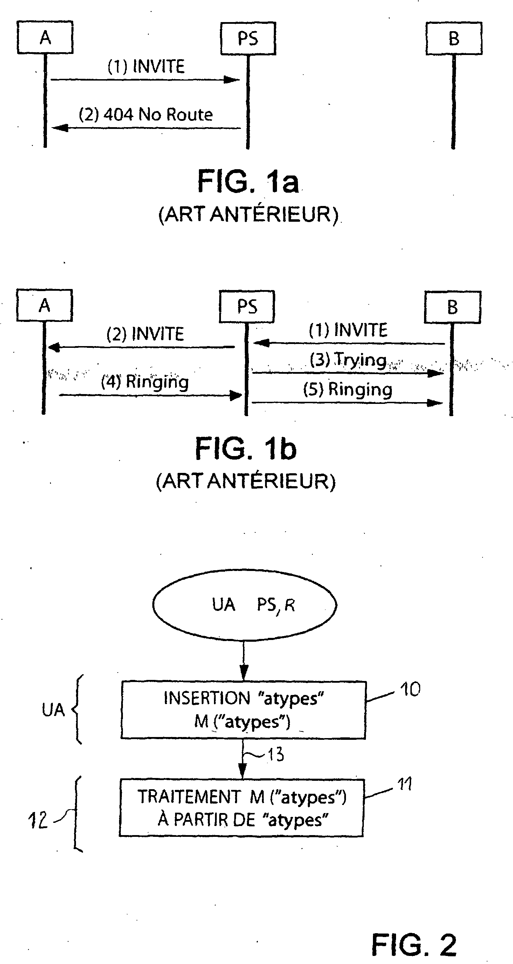

Depuis qu'une première version du protocole SIP a été décrite dans un document référencé RFC 2543 (RFC signifiant "requête pour commentaires" ou "Request For Comment" en anglais), ce dernier est compatible avec le protocole IPv6. Une implémentation de ce protocole SIP décode en principe facilement des adresses conformes aux protocoles IPv4 et IPv6. Une telle adresse peut être introduite dans un champ spécifique tel un entête « CONTACT » ou dans des en-têtes de la partie SDP. Cependant, la présence de telles adresses peut empêcher l'établissement des appels SIP dans le cas où les deux terminaux ne sont pas joignables dans un même environnement IP, à savoir si l'une dispose d'une adresse IPv4 et l'autre d'une adresse IPv6. Ainsi quand un agent utilisateur de type IPv4 A initie une session SIP vers un agent utilisateur de type IPv6 qui s'est enregistré auprès d'un serveur de localisation (noté R ci-après) IPv4, l'échange de messages SIP produit est décrit dans la figure 1 a, où un premier agent utilisateur A désireux d'entrer en contact avec un deuxième agent utilisateur B envoie un message « INVITE » vers un serveur de proximité dit serveur proxy (noté PS ci-après) en utilisant une adresse IPv4 propre à ce dernier. Le serveur proxy PS est ici un serveur attaché à un environnement IPv4 exclusivement. Une fois le message reçu par le serveur proxy PS, ce dernier effectue une requête auprès d'un serveur de localisation encore appelé serveur d'enregistrement et récupère ainsi l'adresse du deuxième agent utilisateur B. Cette adresse étant par hypothèse une adresse IPv6, le serveur proxy PS ne connaît pas de route vers cette destination étant donné que ce serveur proxy PS est exclusivement de type IPv4. Un message d'erreur est alors envoyé vers l'agent utilisateur A concluant à une impossibilité d'établir une session SIP entre les premier et deuxième agents utilisateurs A et B. Ce message d'erreur est noté (2) 404 « No Route » sur la figure 1 a.

Si l'on suppose maintenant que le serveur proxy PS peut néanmoins joindre l'adresse de localisation du premier agent utilisateur A ainsi que celle du deuxième agent utilisateur B, un autre échange de messages SIP est observé, quand le deuxième agent utilisateur B essaye d'appeler le premier agent utilisateur A, ainsi que représenté en figure 1 b.

Dans ce cas de figure, le serveur proxy PS achemine un message « INVITE » reçu du deuxième agent utilisateur B vers l'adresse de localisation du premier agent utilisateur A. Ce message « INVITE » contient une offre SDP décrivant, outre des capacités offertes par le premier agent utilisateur B en termes de CODEC (pour "codeur/décodeur"), un numéro de port RTP et une adresse qu'utilisera le deuxième agent utilisateur B pour émettre/recevoir des flux RTP. Dans le cas de la figure 1b, cette adresse est de type IPv6. Ainsi, lorsque l'agent utilisateur A reçoit ce message « INVITE », il ne peut que refuser l'ouverture de la session car cet agent utilisateur est un client IPv4. Au mieux pourra-t-il, selon les implémentations, renvoyer un message d'erreur indiquant qu'il ne supporte pas les connexions réseaux vers l'adresse IP de l'agent utilisateur B. Dans les deux exemples précédents, décrits en liaison avec les figures 1 a et 1 b, les sessions SIP ne peuvent ainsi pas être établies.

Une coexistence d'adresses IP de types différents pourra affecter d'autres appels que ceux ayant fait l'objet de la représentation graphique décrite ci-dessus. Ainsi, des appels destinés à des clients DS (abréviation bien connue de l'homme du métier de l'expression anglaise "Dual Stack"), peuvent aussi ne pas aboutir à des échanges de flux média, les agents utilisateurs de type DS étant en mesure de traiter les deux types d'adresse IPv4 et IPv6. Ceci est dû au fait que le protocole SIP de base ne permet de renseigner qu'une seule adresse IP pour l'émission ou la réception des flux média. Pour pallier ce problème, un document référencé RFC 4092 introduit une nouvelle sémantique consistant, entre autres, à définir un indicateur dénoté « sdp-anat ». Cette nouvelle sémantique permet à un agent utilisateur, d'annoncer et/ou de découvrir un ou plusieurs types d'adresse. Ainsi, des agents utilisateurs de type DS sont en mesure d'indiquer dans leur offre SDP leurs deux adresses IPv4 et IPv6. Grâce à cette technique, tous les appels de/vers un agent utilisateur de type DS vers/de des clients mono version (i.e. compatibles avec le protocole IPv4 seulement ou avec le protocole IPv6 seulement) peuvent donner lieu à des sessions SIP réussies.

Dans un cas où deux noeuds formant des extrémités d'une liaison de communication destinée à véhiculer un appel donné sont mono version, l'opérateur de service de téléphonie SIP concerné peut avoir recours à des applications ALG (abréviation bien connue de l'homme du métier de l'expression anglaise "Application Level Gateway"), pour modifier les offres SDP afin d'assurer une cohérence entre le type d'adresse supporté et celui contenu dans les messages SIP reçus. Pour ce faire les serveurs SIP utilisent des informations relatives à la couche transport, et non propres au protocole SIP, pour router les appels ou pour déterminer le recours à des applications ALG pour altérer le contenu des offres SDP. Un tel comportement des serveurs SIP n'est pas décrit dans la norme.

D'une manière générale le problème lié aux interconnexions de deux agents utilisateurs hétérogènes (c'est-à-dire de types IP distincts) n'a pas été étudié en détail par la communauté des télécommunications. Excepté une proposition ANAT décrite par (RFC 4091, RFC 4092) qui résout une partie du problème, il n'existe en particulier pas de document de l'IETF décrivant le comportement des serveurs SIP pour acheminer des appels reliant deux agents utilisateurs appartenant à deux environnements IP différents.

En outre, les techniques existantes présentent les inconvénients suivants :
- le recours aux applications ALG et aux fonctions supplémentaires n'est pas documenté. Le serveur proxy PS ne dispose pas de moyens prévus par la RFC 3261 pour faciliter cette tâche ;
- le serveur proxy PS doit avoir recours à des informations de la couche réseau (encore appelée dans ce document couche transport) pour prendre des décisions concernant la couche service. Il est ainsi amené à prendre en compte d'autres considérations telles que l'adresse source des messages, l'adresse utilisée pour contacter le serveur proxy ou examiner la partie SDP. Ceci risque de nuire aux performances du proxy qui est a priori configuré pour ne traiter que les informations du niveau service ;
- l'utilisation des adresses n'est pas optimale : une méthode pour avoir des sessions réussies pourrait être de permettre aux deux agents utilisateurs participant à la communication de disposer de deux types d'adresses pour que la négociation SDP soit réussie dans tous les cas. Cette alternative poserait des problèmes d'optimisation d'utilisation de l'espace d'adresses à la disposition de l'opérateur (notamment en IPv4) ; une telle alternative est proposées dans Yasuro KAWARASAKI et al. ("IPv4/IPv6 SIP interworking methods in dual-stack network, "NTT Corporation, 2003);
- la solution n'est pas générique: la philosophie de routage d'appel et d'intervention du serveur proxy PS dépend de la solution d'interconnexion déployée au niveau transport ;
- le serveur proxy PS ne dispose pas de moyens pour déterminer si un agent utilisateur est de type IPv4, IPv6 ou DS.

Les travaux menés par les inventeurs ont mené ceux-ci à conclure que, nonobstant un besoin qui ressort de l'étude qui précède, il n'existe dans l'état de la technique aucune disposition visant à permettre à un moyen de communication appartenant à un réseau de communication conforme à un protocole IP d'identifier de manière simple le type d'adresse associé à un agent utilisateur donné, une telle carence expliquant pourquoi la plupart des techniques de gestion de communications entre noeuds hétérogènes actuellement à l'étude sont insuffisantes et ne répondent pas aux besoins de service consistant à permettre des communications hétérogènes.

La présente invention offre une solution qui ne présente pas ces inconvénients en proposant un procédé selon la revendication 1 de transmission qui permet une identification aisée du type d'adresse supporté par un agent utilisateur donné, un système de transmission selon la revendication 7, un programme d'ordinateur et un terminal selon les revendications 10 et 11.

En effet, un procédé de transmission de données entre au moins deux noeuds hétérogènes conforme à l'invention est caractérisé en ce qu'il inclut au moins une étape d'insertion, dans au moins un message transmis par un agent utilisateur inclus dans l'un desdits noeuds avant établissement d'une session de communication entre lesdits noeuds, d'un indicateur de type représentatif du type d'au moins une adresse associée à cet agent utilisateur.

L'invention permet d'identifier rapidement des risques d'incompatibilité entre les types de deux agents utilisateurs devant être mis en communication l'un avec l'autre, en vue de remédier le cas échéant à une telle incompatibilité.

L'invention permettra ainsi en particulier à un serveur proxy tel celui évoqué plus haut d'identifier rapidement les types de deux agents utilisateurs devant être mis en communication l'un avec l'autre, ce qui permettra audit serveur d'identifier et de mettre en oeuvre le cas échéant des ressources nécessaires à un établissement effectif d'une session de communication entre ces agents, qu'ils soient ou non de même type.

Par type d'un agent utilisateur, on entend ici une ou des versions de protocole IP (par exemple IPv4, IPv6) que cet agent utilisateur et à même de mettre en oeuvre par l'intermédiaire de la ou des interfaces réseaux dont dispose le noeud SIP qui l'abrite. Deux noeuds A et B sont dits hétérogènes si le type de l'agent utilisateur abrité par le noeud A est différent du type de l'agent utilisateur abrité par le noeud B.

Ainsi, un protocole conforme à l'invention pourra en outre inclure une étape de classification de l'agent utilisateur émetteur d'un indicateur de type selon l'une des trois catégories de type de protocole IP, IPv4 pur, IPv6 pur ou double pile.

Selon un mode de mise en oeuvre particulier de l'invention, l'étape d'insertion est exécutée à l'initiative dudit agent utilisateur.

Ceci permet à l'agent utilisateur de restreindre les communications qu'il reçoit ou émet au type d'interface réseau et de protocole IP correspondant.

L'indicateur de type pourra être avantageusement matérialisé par une valeur numérique codée représentative soit d'un protocole IPv4, soit d'un protocole IPv6, soit encore des deux protocoles IPv4 et IPv6, désigné double pile.

Une telle valeur numérique pourra être très aisément encodée sur un très faible nombre de bits, de sorte que la mise en oeuvre de l'invention n'occasionnera pas d'augmentation significative de volume des messages échangés au titre d'une communication.

Selon une première variante avantageuse de l'invention, un procédé tel que décrit plus haut inclura en outre une étape de mémorisation dudit indicateur de type en référence avec un identifiant de l'agent utilisateur associé.

Une telle étape de mémorisation permettra, entre autres, de créer et de tenir à jour au sein d'une base de données une table de référence permettant d'identifier aisément et directement un type d'adresse IP associé à chaque agent utilisateur dont l'indicateur de type aura été enregistré. Cette base de données pourra être alimentée spontanément par chaque agent utilisateur lors d'une initialisation de connexion de ceiui-ci ou par des mises à jour régulières, et gérée par un serveur de localisation, auprès duquel les agents utilisateurs s'enregistrent à l'initialisation d'une session de communication ou à l'expiration du délai d'enregistrement.

Selon une deuxième variante avantageuse de l'invention, qui pourra être mise en oeuvre alternativement ou cumulativement avec la première variante, un procédé tel que décrit plus haut pourra en outre inclure une étape de transformation d'au moins une adresse incluse dans un message d'invitation à entrer en communication avec un agent utilisateur, ladite étape de transformation étant destinée à être exécutée en cas d'incompatibilité entre un indicateur de type associé à un agent utilisateur ayant émis ledit message d'invitation, d'une part, et un indicateur de type associé à un agent utilisateur destinataire dudit message d'invitation, d'autre part.

Selon cette variante de l'invention, une simple comparaison entre des indicateurs de type associés aux agents utilisateurs appelant et appelé permettra de remédier, avant même toute tentative de connexion entre appelant et appelé, à toute éventuelle incompatibilité entre ceux-ci.

A titre d'exemple, l'invention sera avantageusement mise en oeuvre dans une application de téléphonie sur IP désignée couramment par VoIP (abréviation bien connue de l'homme du métier de l'expression anglaise "Voice over IP"), ou généralement groupée sous le thème des services conversation nels.

L'invention s'inscrira alors dans la problématique générale des services de signalisation basés sur le protocole SIP défini par la RFC 3162 et déployés à la fois pour des clients IPv4 et des clients IPv6. Ces services peuvent être des services de voix, de vidéo, de présence, etc.

Ainsi qu'exposé plus haut, l'invention propose un mécanisme simple pour faciliter l'établissement de sessions SIP entre deux clients hétérogènes, un attaché à un domaine IPv4 et l'autre à un domaine IPv6. Grâce à la mise en oeuvre de l'invention, un serveur proxy SIP est en mesure, d'une part, de router les appels SIP, et, d'autre part, d'intervenir pour altérer ou faire altérer le contenu des offres SDP défini par la RFC 2327 véhiculées dans les messages SIP, afin de permettre l'établissement de sessions entre des noeuds hétérogènes. Au contraire, en l'absence de mise en oeuvre de la présente invention, le serveur proxy SIP doit avoir accès à des informations autres que celles de la couche application, en particulier à celles relatives à la couche réseau, pour orienter son choix de routage d'appel et optimiser le recours aux applications ALG, lesquelles se chargent de modifier les messages SIP pour aboutir à des sessions SIP réussies. Sans cette intervention du serveur SIP et de/des applications ALG, certaines sessions SIP ne peuvent pas avoir lieu, faute d'utilisation de piles protocolaires homogènes.

La mise en oeuvre de l'invention autorise un interfonctionnement de noeuds SIP hétérogènes et permet de simplifier et ainsi de faciliter le routage des appels dans des systèmes de télécommunication mettant en oeuvre le protocole SIP.

En particulier, l'invention permet d'optimiser l'usage d'adresses IP et de ne pas faire reposer le traitement des messages SIP par un serveur proxy SIP sur des informations de la couche transport, pour décider des traitements requis par ces messages SIP reçus par ce serveur.

Selon un mode de réalisation spécifique à l'exemple d'application évoqué ici, l'indicateur de type pourra être inséré dans un champ « CONTACT » inclus dans des messages de requête SIP.

L'introduction de l'indicateur de type dans le message de requête permet d'informer le serveur de localisation et le serveur proxy de la nature des adresses IP supportées par les interfaces réseau disponibles sur un agent utilisateur. En outre, le serveur proxy peut alors traiter un message de requête à partir de cet indicateur de type, pour acheminement vers son destinataire, sans avoir à accéder aux informations contenues dans la couche réseau.

Une transposition au présent exemple d'application de la première variante de l'invention décrite plus haut pourra prévoir de faire insérer par l'agent utilisateur son indicateur de type dans au moins un message « REGISTER ».

Ainsi, sur réception d'un message « REGISTER », le serveur de localisation procède à la mémorisation au moins de l'adresse d'enregistrement, du délai d'expiration de l'enregistrement et de l'indicateur de type. Le serveur de localisation peut mémoriser également d'autres données.

Une transposition au présent exemple d'application de la deuxième variante de l'invention décrite plus haut pourra prévoir de faire transformer par le serveur proxy au moins une adresse incluse dans un message « INVITE » en cas d'incompatibilité entre un indicateur de type associé à l'agent utilisateur ayant émis ledit message « INVITE », d'une part, et un indicateur de type associé à l'agent utilisateur destinataire dudit message « INVITE », d'autre part.

Une telle incompatibilité survient notamment lorsque les agents utilisateurs émetteur et destinataire du message "INVITE" sont de types différents.

Dans une telle application de l'invention, un serveur proxy qui devra effectuer un traitement de routage d'appel en recourant à une passerelle au niveau application permettant de modifier des messages d'appel entre deux agents utilisateurs, de types distincts, exécutera ce traitement:
- soit à partir d'une classification stockée dans une base d'enregistrement actualisée par le serveur de localisation et contenant la nature du type de l'agent utilisateur appelant et appelé;
- soit à partir d'une classification stockée dans la base d'enregistrement contenant la nature du type de l'agent utilisateur appelé et de l'indicateur de type contenu dans le message « INVITE » transmis par l'agent utilisateur appelant.

Ainsi qu'il ressort de la description qui précède, l'invention concerne également, en tant que produit obtenu directement par sa mise en oeuvre dans l'application décrite ci-dessus, tout signal porteur d'un message de requête comportant un indicateur de type, représentatif de la nature d'au moins une adresse IP associée à un agent utilisateur émetteur de ce message, un tel message pouvant par exemple être matérialisé par un message « REGISTER », « INVITE », ou encore « 200 OK ». L'indicateur de type peut notamment être inséré dans un champ "CONTACT".

L'invention concerne également, selon un aspect matériel, un système de transmission de données entre au moins deux noeuds hétérogènes, caractérisé en ce qu'il inclut des moyens d'insertion, dans au moins un message transmis par un agent utilisateur inclus dans l'un desdits noeuds avant établissement d'une session de communication entre lesdits noeuds, d'un indicateur de type représentatif du type d'au moins une adresse associée à cet agent utilisateur.

L'invention concerne également, selon une variante de cet aspect matériel, un système de transmission tel que décrit ci-dessus incluant en outre des moyens de tri et de classification d'agents utilisateurs émetteurs de messages de requête à partir des indicateurs de type desdits agents, et une base de données destinée à mémoriser ladite classification.

L'invention concerne aussi, selon une autre variante de cet aspect matériel, un système de transmission tel que décrit ci-dessus incluant en outre des moyens de comparaison d'indicateurs de types propres à au moins un agent utilisateur appelant et à au moins un agent utilisateur appelé.

Selon un autre de ses aspect matériels, l'invention concerne en outre, en tant que moyens utiles à sa mise en oeuvre, plusieurs programmes d'ordinateur incluant au moins une série d'instructions de code de programme pour l'exécution de certaines des étapes d'un procédé conforme à la description qui précède lorsque ledit programme est exécuté sur un ordinateur.

L'invention sera mieux comprise à l'aide de la description suivante, faite à titre d'exemple non-limitatif et en regard des dessins annexés, dans lesquels, outre les figures 1 a et 1 b relatives à l'art antérieur,
- la figure 2 représente, à titre illustratif, un organigramme des étapes essentielles de mise en oeuvré du procédé objet de l'invention ;
- la figure 3 représente, à titre illustratif, un premier exemple d'enregistrement pour des agents utilisateurs de type IPv4 et IPv46 ;
- la figure 4 représente, à titre illustratif, un deuxième exemple d'enregistrement pour un agent utilisateur de type double pile ;
- la figure 5 représente un système d'interfonctionnement de noeuds SIP hétérogènes conforme à l'objet de l'invention, opérant dans le cas de la transmission, par un agent utilisateur, d'un message « REGISTER » destiné à un serveur de localisation et d'un message « INVITE » transitant par un serveur proxy.

Une description plus détaillée du procédé conforme à l'objet de la présente invention sera maintenant donnée en liaison avec la figure 2 et les figures suivantes.

D'une manière générale, on indique que chaque noeud hétérogène formé par exemple par un terminal IP dans la version IPv4, IPv6 ou dans la version hybride désignée double pile DS, comporte un agent utilisateur UA de type déterminé, le type de cet agent utilisateur correspondant à la version du protocole IP que cet agent utilisateur est à même de mettre en oeuvre par l'intermédiaire de la ou des interfaces réseaux dont dispose le terminal considéré.

Ainsi que représenté en figure 2, le procédé objet de l'invention consiste au moins, en une étape 10, à insérer dans un message de requête M transmis par l'agent utilisateur UA un indicateur de type, cet indicateur de type étant noté « atypes ». Après insertion, le message de requête transmis est noté M(« atypes »). Un tel message de requête peut être par exemple un message d'enregistrement destiné à un serveur de localisation R. Il peut s'agir également d'un message destiné à un serveur proxy PS, par exemple un message d'invitation à entrer en communication avec un autre agent utilisateurs.

Après la transmission 13 du message, dans lequel l'indicateur de type a été inséré, le procédé objet de l'invention consiste en une étape 11 à traiter le message de requête M(« atypes ») à partir de l'indicateur de type « atypes » qu'il contient. Ce traitement est effectué dans un équipement référencé 12, qui peut être le serveur de localisation dans le cas d'un message d'enregistrement, ou ie serveur proxy dans le cas d'un message d'invitation à entrer en communication avec un autre agent.

Dans ce dernier cas, le traitement 11 effectué au niveau du serveur proxy 12 consiste en un acheminement du message, sans qu'il soit nécessaire pour le serveur proxy 12 d'accéder à des informations contenues dans la couche transport.

On comprend en particulier que l'indicateur de type « atypes » contient au moins une donnée numérique codée représentative de la nature des interfaces réseau et du protocole IP disponibles sur l'agent utilisateur émetteur du message dans le but de renseigner le serveur de localisation et le serveur proxy 12 et de leur permettre:
- pour le serveur de localisation 12, de procéder à l'enregistrement 11 de l'indicateur de type, associé à un identifiant de l'agent utilisateur, de façon à maintenir une base de données renseignant sur les types des différents agents utilisateurs susceptibles de vouloir communiquer;
- pour le serveur proxy 12, d'effectuer l'acheminement 11 en l'absence d'accès à toute information contenue dans la couche transport ayant servi à la transmission du message M(« atypes »).

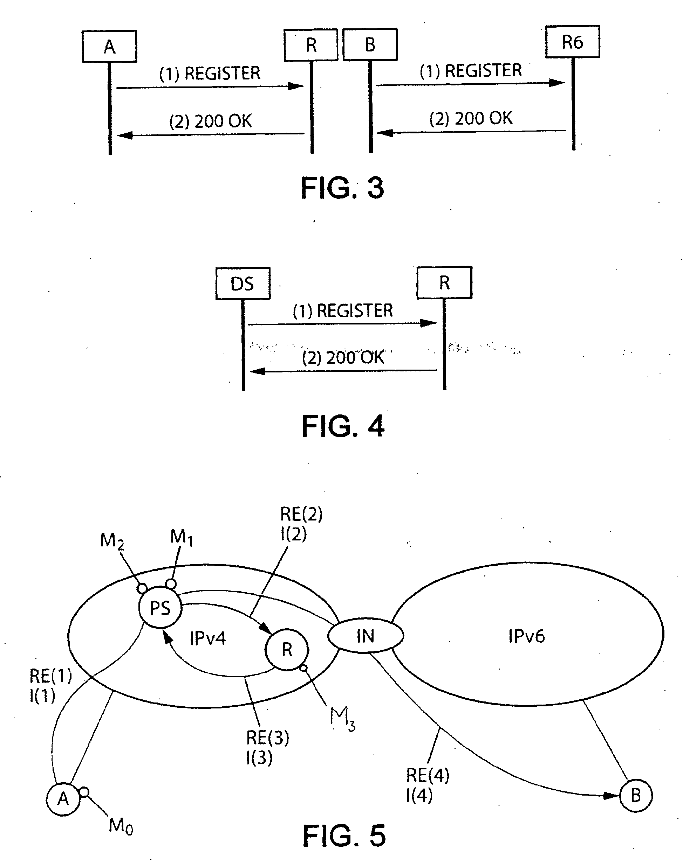

Un exemple de mise en oeuvre de l'étape 10 du procédé objet de l'invention représentée en figure 2 sera maintenant décrit en liaison avec les figures 3 et 4.

Dans un mode de mise en oeuvre particulier, on insère l'indicateur de type « atypes » dans le champ « CONTACT » des requêtes SIP, en particulier des requêtes « REGISTER » et « INVITE ». Pour illustrer la définition de cet indicateur, la description ABNF du champ « CONTACT », telle que décrite par la RFC 3162, est indiquée ci-après.

Dans la description ABNF ci-après, les éléments connus et décrits par la RFC 3162 sont en écriture droite et les éléments descriptifs supplémentaires sont en écriture droite en caractères gras.

L'ensemble de la nouvelle description ABNF est donné au tableau T1 ci-après :

**Tableau T1**

| | | |
|---|---|---|
| Contact | = | (« Contact » / « m ») HCOLON |
| | | (STAR / (contact-param *(COMMA contact-param))) *COMMA atypes* |
| contact-param | = | (name-addr / addr-spec) *(SEMI contact-params) |
| name-addr | = | [display-name] LAQUOT addr-spec RAQUOT |
| addr-spec | = | SIP-URI / SIPS-URI / absoluteURI |
| display-name | = | *(token LWS)/ quoted-string |
| contact-params | = | c-p-q / c-p-expires / contact-extension |
| c-p-q | = | « q » EQUAL qvalue |
| c-p-expires | = | « expires » EQUAL delta-seconds |
| contact-extension | = | generic-param |
| delta-seconds | = | 1*DIGIT |
| *atypes* | = | *« atypes » EQUAL 4*/*6*/*0* |

Un agent utilisateur peut souhaiter restreindre les communications qu'il reçoit ou émet :
- à son interface IPv4,
- à son interface IPv6,
- ou utiliser les deux types d'interface, lorsqu'il est équipé d'une interface double pile DS (i.e. compatible avec les deux versions de protocole IPv4 et IPv6).

Cette opération est notifiée à l'aide de l'indicateur de type « atypes ».

Un agent utilisateur peut choisir par configuration de ne pas annoncer une disponibilité effective en positionnant l'indicateur de type « atypes » à la bonne valeur. A noter que pour l'interface IPv6, l'interface est jugée disponible IPv6 seulement si l'une des adresses configurées est de portée globale (En effet, le protocole IPv6 distingue les adresses de type "Link local" et "global". Les adresses de portée locale ne sont pas routables au delà du réseau local contrairement aux adresses de portée globale qui sont des adresses routables i.e. joignables au-delà du réseau local). Lors de la procédure d'enregistrement, l'agent utilisateur SIP envoie un message « REGISTER » avec un champ «CONTACT» étendu tel que décrit au tableau T1 contenant la rubrique supplémentaire « atypes ». Cette rubrique peut prendre les valeurs suivantes :
- 4 : si l'agent utilisateur supporte IPv4 uniquement,
- 6 : si l'agent utilisateur supporte IPv6 uniquement,
- 0 : si l' agent utilisateur est double pile.

Un agent utilisateur peut indiquer au serveur proxy PS qu'il supporte seulement le protocole IPv4 en positionnant l'indicateur de type « atypes » à 4 (bien que l'agent utilisateur soit de type double pile DS par exemple), ou le protocole IPv6 en positionnant l'indicateur de type « atypes » à 6 ou un protocole double pile DS en positionnant l'indicateur de type « atypes » à 0 dans le message « REGISTER » qu'il envoie au serveur d'enregistrement R.

R et R6 indiquent des serveurs de localisation sur la figure 3, respectivement associés aux agents utilisateurs A et B.

### Exemple d'agent utilisateur de type IPv4 :

On suppose que A est un agent utilisateur de type IPv4 dont l'adresse est 192.165.25.2. Ainsi que représenté sur la figure 3, l'agent utilisateur A envoie au serveur de localisation R le message « REGISTER » (1) suivant donné au tableau T2 :

**Tableau T2**

| | |
|---|---|
| REGISTER | sip :r.test.evi SIP/2.0 |
| Via : | SIP/2.0/UDP 192.165.25.2:5062;branch=z9hG4bK00e31d6ed |
| Max-Forwards : | 70 |
| Content-Length : | 0 |
| To : | A <sip:A@test.evi> |
| From : | A <sip: A@test.evi >;tag=ed3833bd7363e68 |
| Call-ID : | a8a83b61 0ae5d242289dfc1 c78b7f1 d8@test.evi |
| CSeq : | 1830746364 REGISTER |
| Contact: | A <sip:A@192.165.25.2:5062>;expires=900, atypes=4 |

Le serveur d'enregistrement R répond à l'agent utilisateur A avec le message "200 OK" (2) donné au tableau T3 :

**Tableau T3**

| | |
|---|---|
| | SIP/2.0 200 OK |
| Call-ID : | a8a83b610ae5d242289dfc1c78b7f1d8@evi.biz |
| CSeq : | 1830746365 REGISTER |
| From : | A <sip:A@test.evi>;tag=ed3833bd7363e68 |
| To : | A <sip:A@test.evi>;tag=3ab7fe89d998709 |
| Via : | SIP/2.0/UDP 192.165.25.2:5062;branch=z9hG4bK00e31d6ed |
| Content-Length : | 0 |
| Contact : | A <sip:A@192.165.25.2:5062>;expires=900, atypes=4 |

### Exemple d'agent utilisateur IPv6 :

On suppose que B est un agent utilisateur de type IPv6 dont l'adresse est 2001:688:1ffb:ff80::2. Comme représenté sur la figure 3, l'agent utilisateur B envoie au serveur de localisation R6 le message REGISTER (1) donné au tableau T4 :

**Tableau T4**

| | |
|---|---|
| REGISTER | sip:r6.test.evi SIP/2.0 |
| Via : | SIP/2.0/UDP |
| | [2001:688:1 ffb:ff80::2]:5062;branch=z9hG4bK00e31 d6ed |
| Max-Forwards : | 70 |
| Content-Length : | 0 |
| To : | B <sip:B@test.evi> |
| From : | B <sip:B@test.evi >;tag=ed3833bd7363e68 |
| Call-ID : | a8a83b61 0ae5d242289dfc1 c78b7f1 d8@test.evi |
| CSeq : | 1830746364 REGISTER |
| Contact : | B <sip:B@[2001:688:1 ffb:ff80::2]:5062>;expires=900, atypes=6 |

Le serveur d'enregistrement R6 répond pour confirmer l'enregistrement avec un message « 200 OK » (2) donné au tableau T5 :

**Tableau T5**

| | |
|---|---|
| | SIP/2.0 200 OK |
| Call-ID : | a8a83b61 0ae5d242289dfc1 c78b7f1 d8@evi.biz |
| CSeq : | 1830746365 REGISTER |
| From : | B <sip:B@test.evi >;tag=ed3833bd7363e68 |
| To : | B <sip:B@test.evi >;tag=3ab7fe89d998709 |
| Via: | SIP/2.0/UDP[2001:688:1ffb:ff80::2]:5062;branch=z9hG4bK00e31d6ed |
| Content-Length: | 0 |
| Contact : | B <sip:B@[2001:688:1ffb:ff80::2]:5062>;expires=900, atypes=6 |

L'adresse IP contenue dans le champ « CONTACT » peut être unique et de type différent de celui indiqué dans le champ d'indicateur de type « atypes ». En effet, un agent utilisateur instanciant l'indicateur de type « atypes » à 6 peut utiliser une adresse IPv4 dans le champ « CONTACT », ou, un agent utilisateur ayant instancié l'indicateur de type « atypes » à 0 peut ne déclarer qu'une seule adresse et non pas deux, ainsi qu'il sera décrit ci-après. L'adresse contenue dans le champ « CONTACT » est exploitée par le serveur proxy SIP pour acheminer les messages de signalisation. Les messages média seront transmis à l'agent utilisateur par son interface IPv6, car cet agent utilisateur s'est déclaré auprès de son serveur proxy PS comme un agent utilisateur IPv6 (sur la base de l'indicateur de type inséré dans les messages qu'il émet à destination du serveur proxy, ou sur la base de l'indicateur de type enregistré pour cet agent utilisateur par le serveur de localisation).

### Exemple d'agent utilisateur DS avec une seule adresse dans le champ « CONTACT » :

On suppose en liaison avec la figure 4 que l'agent utilisateur DS est un agent utilisateur de type double pile 2001:688:1ffb:ff80::2/192.168.25.5. Comme représenté sur la figure 4 précitée :
L'agent utilisateur DS envoie, lors d'une phase d'enregistrement, à son serveur de localisation R le message « REGISTER » (1) donné au tableau T6 :

**Tableau T6**

| | |
|---|---|
| REGISTER | sip :r.test.evi SIP/2.0 |
| Via : | SIP/2.0/UDP 192.68.25.5062;branch=z9hG4bK00e31d6ed |
| Max-Forwards : | 70 |
| Content-Length: | 0 |
| To: | DS <sip:DS@test.evi> |
| From : | DS <sip:DS@test.evi >;tag=ed3833bd7363e68 |
| Call-ID : | a8a83b61 0ae5d242289dfc1 c78b7f1 d8@test.evi |
| CSeq : | 1830746364 REGISTER |
| Contact : | DS <sip:DS@192.168.25.5:5062>;expires=900, atypes=0 |

Le serveur de localisation R6 répond pour confirmer l'enregistrement avec un message « 200 OK » (2) donné au tableau T7 :

**Tableau T7**

| | |
|---|---|
| | SIP/2.0 200 OK |
| Call-ID : | a8a83b61 0ae5d242289dfc1 c78b7f1d8@evi.biz |
| CSeq : | 1830746365 REGISTER |
| From : | DS <sip:DS@test.evi >;tag=ed3833bd7363e68 |
| To : | DS <sip:DS@test.evi >;tag=3ab7fe89d998709 |
| Via : | SIP/2.0/UDP 192.168.25.5:5062;branch=z9hG4bK00e31d6ed |
| Content-Length: | 0 |
| Contact : | DS <sip:DS@192.168.25.5:5062>;expires=900, atypes=0 |

### Traitement de l'indicateur "atypes"

A la réception du message « REGISTER », le serveur de localisation R stocke en plus de l'adresse d'enregistrement AOR (abréviation anglaise de l'expression "Address Of Record"), et du délai d'expiration de l'enregistrement, la valeur de l'indicateur de type « atypes ». Ces données (ainsi que d'autres éventuellement) sont stockées dans une base d'enregistrement gérée par le serveur de localisation. Elles peuvent être mises à jour par d'autres messages REGISTER issus du même agent utilisateur. Ce traitement remplace le traitement prévu initialement dans la RFC 3261.

A l'aide de l'information de l'indicateur de type « atypes », le serveur de localisation classifie ses agents utilisateurs en trois catégories:
- "Pure IPv4" en anglais, pour IPv4 pur ;
- "Pure IPv6" en anglais, pour IPv6 pur ;
- DS, double pile.

Cette classification est accessible au serveur proxy par simple consultation de la base d'enregistrement gérée par le serveur de localisation. Cette classification peut également être effectuée directement par le serveur proxy par simple lecture de l'indicateur de type inséré par un agent utilisateur dans un message destiné au proxy, comme détaillé ci-après.

En effet, les agents utilisateurs peuvent aussi positionner l'indicateur de type « atypes » quand ils émettent un message « INVITE ».

Le serveur proxy PS doit se contenter de transmettre les messages SIP sans modifier leur contenu dans les cas suivants, référencés CAS-1 :
- IPv4 vers IPv4,
- IPv6 vers IPv6,
- IPv4 vers DS et DS vers IPv4,
- IPv6 vers DS et DS vers IPv6,
- DS vers DS.

Dans le cas CAS-1 précité, les agents utilisateurs sont dits compatibles, car ils sont de même type (ou, plus généralement dans le cas des agents utilisateurs DS, ont au moins un type commun) et peuvent donc dialoguer en utilisant la même version de protocole IP.

La modification des messages SIP conduisant à disposer des adresses IP de l'agent utilisateur appelé et appelant de même type après modification intervient seulement dans les cas suivants référencés CAS-2 :
- IPv6 vers IPv4,
- IPv4 vers IPv6.

Dans le cas CAS-2 précité, les agents utilisateurs sont dits incompatibles, car ils ne sont pas de même type, et ne peuvent donc pas communiquer.

Pour le routage d'appel et la décision de recourir à une application ALG ou pour modifier les messages SIP pour obtenir des sessions réussies entre deux agents utilisateurs de types distincts, le serveur proxy PS peut agir soit:
- *en examinant la base d'enregistrement maintenue par le serveur de localisation :*
   Dans ce cas, le serveur proxy PS interroge le serveur de localisation R sur le type des agents utilisateurs appelant et appelé. Le serveur proxy PS peut alors décider de modifier le contenu SDP du message SIP pour harmoniser ce dernier avec le type d'adresse supporté par l'appelé, s'il s'agit d'un scénario faisant partie du CAS-2. L'exemple représenté en figure 5 illustre ce mode opératoire au travers d'une communication entre un agent utilisateur A de type IPv4 et un agent utilisateur B de type IPv6. Les fonctions d'interconnexion des réseaux IPv4 et IPv6 sont représentées par le noeud IN qui sert de relais et exécute en particulier la translation protocolaire des datagrammes IPv4 en des datagrammes IPv6 et vice versa.

   On suppose que l'agent utilisateur B est un agent utilisateur de type IPv6. A l'initialisation du service, l'agent utilisateur B s'est enregistré auprès du serveur de localisation R en positionnant l'indicateur de type « atypes » à 6 et l'agent utilisateur A s'est enregistré auprès du serveur de localisation R en positionnant l'indicateur de type « atypes » à 4. Par souci de simplification, cette phase préalable d'enregistrement n'est pas représentée sur la figure 5.
   L'agent utilisateur B est connu dans l'environnement IPv6 par une adresse IPv6 qui est traduite en une adresse IPv4 par les mécanismes d'interconnexion IPv6-IPv4 tels que le NAT-PT. Dans ce cas, l'agent utilisateur B est identifié comme étant un agent utilisateur de type IPv6 et l'agent utilisateur A comme un agent utilisateur de type IPv4. Lorsque l'agent utilisateur A veut établir une session avec l'agent utilisateur B, les messages SIP échangés sont les suivants:
   - RE (1) l'agent utilisateur A envoie un message « INVITE » vers le serveur proxy PS ;
   - RE (2) le serveur proxy PS interroge le serveur de localisation R sur l'adresse de localisation de l'agent utilisateur B, et sur les indicateurs de type « atypes » des agents utilisateurs A et B tels qu'indiqués lors de la phase d'enregistrement ;
   - RE (3) le serveur de localisation R retourne l'adresse de l'agent utilisateur B, l'indicateur de type « atypes » de l'agent utilisateur B, et celui de l'agent utilisateur A ;
   - RE (4) le serveur proxy PS compare les deux indicateurs de type « atypes », des agents utilisateurs A et B. Le serveur proxy PS vérifie, à partir de la classification des types disponible auprès du serveur de localisation R, que A est un agent utilisateur de type IPv4 et B un agent utilisateur de type IPv6. Le serveur proxy PS invoque alors les mécanismes d'adaptation pour modifier l'offre SDP initiale de l'agent utilisateur A pour qu'elle contienne une adresse IPv6. Le serveur proxy PS renvoie alors le message « INVITE » modifié vers l'adresse de l'agent utilisateur B comme indiquée par le serveur de localisation R.
   Sans cette procédure, le serveur proxy PS ne disposerait pas de moyens pour router l'appel vers l'agent utilisateur B et pour invoquer les fonctions d'adaptation nécessaires à un acheminement correct du message jusqu'à B. En effet, le serveur proxy PS renverrait la requête vers l'agent utilisateur B sans modifier celle-ci, et, dans ce cas, la session SIP entre les agents utilisateurs A et B ne pourrait pas avoir lieu (confer Figure 1 b).
- *En examinant la base d'enregistrement, et l'indicateur de type « atypes » véhiculé dans le message « INVITE » :*
   Dans ce cas, le serveur proxy PS questionne le serveur de localisation R sur le type de l'agent utilisateur appelé B. Le type de l'agent utilisateur appelant A est déduit du message « INVITE » émis par ce dernier. Le serveur proxy PS peut alors décider de modifier le contenu du message SIP pour harmoniser ce dernier avec le type d'adresse supporté par l'agent utilisateur appelé B; il s'agit d'un scénario faisant partie du CAS-2. Pour cette option, un agent utilisateur peut restreindre le type d'adresse à utiliser par session. L'exemple décrit en liaison avec la figure 5 illustre cet autre mode opératoire au travers d'une communication entre un agent utilisateur de type IPv4 et un agent utilisateur de type IPv6.

   On suppose que B est un agent utilisateur de type IPv6. Au démarrage du service, l'agent utilisateur B s'est enregistré auprès du serveur de localisation R en positionnant l'indicateur de type « atypes » à 6 et l'agent utilisateur A en positionnant l'indicateur de type « atypes » à 4. Dans ce cas, l'agent utilisateur B est identifié comme étant un agent utilisateur de type IPv6 et l'agent utilisateur A comme un agent utilisateur de type IPv4. Lorsque l'agent utilisateur A veut établir une session avec l'agent utilisateur B, les messages SIP échangés sont les suivants:
   - I (1) l'agent utilisateur A envoie un message « INVITE » vers le serveur proxy PS ;
   - I (2) le serveur proxy PS interroge le serveur de localisation R sur l'adresse de localisation de l'agent utilisateur B, et sur l'indicateur de type « atypes » de B comme indiqué lors de la phase d'enregistrement ;
   - I (3) le serveur de localisation R retourne l'adresse et l'indicateur de type « atypes » de l'agent utilisateur B ;
   - I (4) le serveur proxy PS extrait l'indicateur de type « atypes » de l'agent utilisateur A de la requête « INVITE » I (1) et le compare à celui de l'agent utilisateur B. Le serveur proxy PS vérifie, à partir de la classification des types disponible auprès du serveur de localisation R, que A est un agent utilisateur de type IPv4 et B un agent utilisateur de type IPv6. Le serveur proxy PS invoque alors les mécanismes d'adaptation pour modifier l'offre SDP initiale de l'agent utilisateur A pour qu'elle contienne une adresse IPv6. Le serveur proxy PS renvoie alors le message « INVITE » modifié vers l'adresse de l'agent utilisateur B comme indiquée par le serveur de localisation R.

Pour la mise en oeuvre du protocole illustré en figure 5, on indique que le serveur proxy PS comporte avantageusement un module M1 de comparaison d'indicateurs de type associés à un agent utilisateur appelant et à un agent utilisateur appelé. Lorsque le module M1 détermine que les agents utilisateurs appelant et appelé sont de types différents, le serveur proxy active un module M2 d'appel à une ressource de modification de l'adresse IP de l'agent utilisateur appelant. La ressource de modification, externe au serveur proxy PS n'est pas représentée sur la figure 5. Les modules M₁ et M₂ peuvent être implémentés sous forme de programmes d'ordinateur, désignés par souci de simplification par la même référence alphanumérique sur la figure 5.

L'invention couvre en outre un programme d'ordinateur M₀ pour exécution par un ordinateur ou un dispositif dédié tel qu'un agent utilisateur de type IPv4, IPv6 ou double pile d'un terminal IP. Lors de l'exécution du programme d'ordinateur M₀, ses instructions de code permettent l'insertion dans un message de requête transmis par cet agent utilisateur UA, d'un indicateur de type « atypes » représentatif du type d'une ou plusieurs adresses IP supportée(s) par les interfaces réseau disponibles sur cet agent utilisateur UA, ainsi que décrit et représenté en figures 2, 3 et 4 précédemment dans la description.

Comme indiqué ci-dessus, l'invention couvre encore un programme d'ordinateur M₁, M₂ comportant une suite d'instructions pour exécution par un ordinateur ou un dispositif dédié tel qu'un serveur proxy PS. Lors de l'exécution du programme M₁, M₂, ces instructions permettent d'effectuer le traitement d'un message de requête transmis par un agent utilisateur au serveur proxy et contenant un indicateur de type « atypes » représentatif du type d'une ou plusieurs adresses IP supportée(s) par les interfaces réseau disponibles sur cet agent utilisateur, Un tel traitement consiste en l'acheminement de ce message de requête vers son destinataire, en l'absence d'accès à toute information contenue dans la couche de transport, ainsi que décrit et représenté en figures 2 à 5 précédemment dans la description.

L'invention couvre aussi un programme d'ordinateur M₃, comprenant des instructions de code pour exécution par un ordinateur ou un dispositif dédié tel qu'un serveur de localisation R. Lors de l'exécution du programme M3, ces instructions permettent d'extraire un indicateur de type d'un message d'enregistrement transmis par un agent utilisateur, et de mémoriser cet indicateur de type, en relation avec un identifiant de l'agent utilisateur concerné, dans une base d'enregistrement. Elles permettent également de réaliser une classification de l'agent utilisateur concerné selon l'une des trois catégories de type de protocole IP, à savoir IPv4, IPv6 ou double pile, ainsi que décrit et représenté en figures 2 à 5 précédemment dans la description.

## Revendications

1. Procédé de transmission de données entre au moins deux noeuds hétérogènes, c'est-à-dire utilisant des protocoles de types IPv4 pur, IPv6 pur ou double pile différents, incluant au moins une étape d'insertion, dans au moins un message transmis par un agent utilisateur inclus dans l'un desdits noeuds avant établissement d'une session de communication entre lesdits noeuds, d'un indicateur de type représentatif du type IPv4 pur, IPv6 pur ou double pile d'au moins une adresse associée à cet agent utilisateur, ledit procédé étant **caractérisé en ce que** ledit indicateur de type est inséré dans un champ appelé « CONTACT » inclus dans un message de requête SIP.

2. Procédé selon la revendication 1, **caractérisé en ce que** l'étape d'insertion est exécutée à l'initiative dudit agent utilisateur.

3. Procédé selon l'une des revendications 1 ou 2, **caractérisé en ce que** ledit indicateur de type est une valeur numérique codée représentative soit d'un protocole IPv4, soit d'un protocole IPv6, soit encore des deux protocoles IPv4 et IPv6, désigné double pile.

4. Procédé selon l'une des revendications 1 à 3, **caractérisé en ce qu'**il inclut en outre une étape de mémorisation dudit indicateur de type en référence avec un identifiant de l'agent utilisateur associé.

5. Procédé selon l'une des revendications 1 à 4, **caractérisé en ce qu'**il inclut en outre une étape de classification de l'agent utilisateur émetteur d'un indicateur de type selon l'une des trois catégories de type de protocole IP, IPv4 pur, IPv6 pur ou double pile.

6. Procédé selon l'une des revendications 1 à 5, **caractérisé en ce qu'**il inclut en outre une étape de transformation d'au moins une adresse incluse dans un message d'invitation à entrer en communication avec un agent utilisateur, ladite étape de transformation étant destinée à être exécutée en cas d'incompatibilité entre un indicateur de type associé à un agent utilisateur ayant émis ledit message d'invitation, d'une part, et un indicateur de type associé à un agent utilisateur destinataire dudit message d'invitation, d'autre part.

7. Système de transmission de données entre au moins deux noeuds hétérogènes, c'est-à-dire utilisant des protocoles de types IPv4 pur, IPv6 pur ou double pile différents, incluant des moyens d'insertion, dans au moins un message transmis par un agent utilisateur inclus dans l'un desdits noeuds avant établissement d'une session de communication entre lesdits noeuds, d'un indicateur de type représentatif du type IPv4 pur, IPv6 pur ou double pile d'au moins une adresse associée à cet agent utilisateur, ledit système étant **caractérisé en ce que** ledit indicateur de type est inséré dans un champ appelé « CONTACT » inclus dans un message de requête SIP.

8. Système de transmission selon la revendication 7, **caractérisé en ce qu'**il inclut en outre des moyens de tri et de classification d'agents utilisateurs émetteurs de messages de requête à partir des indicateurs de type desdits agents, et une base de données destinée à mémoriser ladite classification.

9. Système selon la revendication 8, **caractérisé en ce qu'**il inclut en outre des moyens de comparaison d'indicateurs de types propres à au moins un agent utilisateur appelant et à au moins un agent utilisateur appelé.

10. Programme d'ordinateur incluant au moins une série d'instructions de code de programme pour l'exécution des étapes d'un procédé conforme à l'une des revendications 1 à 6 lorsque ledit programme est exécuté sur un ordinateur.

11. Terminal formant noeud d'un système de transmission de données, incluant des moyens d'insertion, dans au moins un message transmis par un agent utilisateur inclus dans ledit noeud, d'un indicateur de type représentatif du type IPv4 pur, IPv6 pur ou double pile d'au moins une adresse associée à cet agent utilisateur, ledit terminal étant **caractérisé en ce que** ledit indicateur de type est inséré dans un champ appelé « CONTACT » inclus dans un message de requête SIP.

## Patentansprüche

1. Verfahren zum Übertragen von Daten zwischen wenigstens zwei heterogenen Knoten, d. h. Knoten, die verschiedene Protokolle des Typs reines IPv4 oder reines IPv6 oder Doppelstapel verwenden, das Folgendes umfasst: wenigstens einen Schritt des Einsetzens in wenigstens eine Nachricht, die von einem in einem der Knoten enthaltenen Anwenderagenten gesendet wird, bevor eine Kommunikationssitzung zwischen den Knoten hergestellt wird, eines Typindikators, der den Typ reines IPv4, reines IPv6 oder Doppelstapel wenigstens einer diesem Anwenderagenten zugeordneten Adresse angibt, wobei das Verfahren **dadurch gekennzeichnet ist, dass** der Typindikator in ein Feld eingesetzt wird, das "CONTACT" genannt wird und in einer SIP-Anforderungsnachricht enthalten ist.

2. Verfahren nach Anspruch 1, **dadurch gekennzeichnet, dass** der Einsetzschritt auf Initiative des Anwenderagenten ausgeführt wird.

3. Verfahren nach einem der Ansprüche 1 oder 2, **dadurch gekennzeichnet, dass** der Typindikator ein codierter digitaler Wert ist, der entweder ein IPv4-Protokoll oder ein IPv6-Protokoll oder aber zwei Protokolle, nämlich IPv4 und IPv6, die Doppelstapel genannt werden, darstellt.

4. Verfahren nach einem der Ansprüche 1 bis 3, **dadurch gekennzeichnet, dass** es außerdem einen Schritt des Speicherns des Typindikators in Bezug auf eine Kennung des zugeordneten Anwenderagenten umfasst.

5. Verfahren nach einem der Ansprüche 1 bis 4, **dadurch gekennzeichnet, dass** es außerdem einen Schritt des Klassifizierens des Anwenderagenten, der einen Typ-indikator sendet, gemäß einer von drei Kategorien des IP-Protokoll-Typs, nämlich reines IPv4, reines IPv6 oder Doppelstapel, umfasst.

6. Verfahren nach einem der Ansprüche 1 bis 5, **dadurch gekennzeichnet, dass** es außerdem einen Schritt des Transformierens wenigstens einer Adresse, die in einer Nachricht enthalten ist, die zum Eintreten in eine Kommunikation mit einem Anwenderagenten einlädt, umfasst, wobei der Transformationsschritt dazu bestimmt ist, im Fall einer Inkompatibilität zwischen einerseits einem Typindikator, der einem Anwenderagenten zugeordnet ist, der die Einladungsnachricht gesendet hat, und andererseits einem Typindikator, der einem Ziel-Anwenderagenten der Einladungsnachricht zugeordnet ist, ausgeführt wird.

7. System zum Übertragen von Daten zwischen wenigstens zwei heterogenen Knoten, d. h. Knoten, die verschiedene Protokolle des Typs reines IPv4, reines IPv6 oder Doppelstapel verwenden, das Folgendes umfasst: Mittel zum Einsetzen in wenigstens eine Nachricht, die von einem in einem der Knoten enthaltenen Anwenderagenten übertragen wird, bevor eine Kommunikationssitzung zwischen den Knoten hergestellt wird, eines Typindikators, der den Typ reines IPv4, reines IPv6 oder Doppelstapel wenigstens einer diesem Anwenderagenten zugeordneten Adresse darstellt, wobei das System **dadurch gekennzeichnet ist, dass** der Typindikator in ein Feld eingesetzt wird, das "CONTACT" genannt wird und in einer SIP-Anforderungsnachricht enthalten ist.

8. Übertragungssystem nach Anspruch 7, **dadurch gekennzeichnet, dass** es außerdem Mittel zum Sortieren und Klassifizieren von Anwenderagenten, die Anforderungsnachrichten senden, anhand von Typindikatoren der Agenten, und eine Datenbank, die dazu bestimmt ist, die Klassifizierung zu speichern, umfasst.

9. System nach Anspruch 8, **dadurch gekennzeichnet, dass** es außerdem Mittel zum Vergleichen der Typindikatoren, die zu wenigstens einem anrufenden Anwenderagenten und zu wenigstens einem angerufenen Anwenderagenten gehören, umfasst.

10. Computerprogramm, das wenigstens eine Reihe von Programmcodebefehlen für die Abarbeitung der Schritte eines Verfahrens nach einem der Ansprüche 1 bis 6, wenn das Programm auf einem Computer abgearbeitet wird, enthält.

11. Endgerät, das einen Knoten eines Datenübertragungssystems bildet, das Mittel zum Einsetzen in wenigstens eine Nachricht, die von einem in dem Knoten enthaltenen Anwenderagenten übertragen wird, eines Typindikators, der den Typ reines IPv4, reines IPv6 oder Doppelstapel wenigstens einer diesem Anwenderagenten zugeordneten Adresse darstellt, umfasst, wobei das Endgerät **dadurch gekennzeichnet ist, dass** der Typindikator in ein Feld eingesetzt wird, das "CONTACT" genannt wird und in einer SIP-Anforderungsnachricht enthalten ist.

## Claims

1. Method for transmitting data between at least two heterogeneous nodes, that is to say using protocols of different types, pure IPv4, pure IPv6 or dual-stack, including at least one step of inserting, into at least one message transmitted by a user agent included in one of said nodes before establishment of a communication session between said nodes, an indicator of type representative of the type, pure IPv4, pure IPv6 or dual-stack, of at least one address associated with this user agent, said method being **characterized in that** said indicator of type is inserted into a field called "CONTACT" included in an SIP request message.

2. Method according to Claim 1, **characterized in that** the insertion step is executed on the initiative of said user agent.

3. Method according to one of Claims 1 or 2, **characterized in that** said indicator of type is a coded numerical value representative either of an IPv4 protocol, or of an IPv6 protocol, or else of both protocols IPv4 and IPv6, referred to as dual-stack.

4. Method according to one of Claims 1 to 3, **characterized in that** it furthermore includes a step of storing said indicator of type in reference with an identifier of the associated user agent.

5. Method according to one of Claims 1 to 4, **characterized in that** it furthermore includes a step of classifying the sender user agent issuing an indicator of type according to one of the three categories of type of IP protocol, pure IPv4, pure IPv6 or dual-stack.

6. Method according to one of Claims 1 to 5, **characterized in that** it furthermore includes a step of transforming at least one address included in an invitation message inviting entry into communication with a user agent, said transformation step being intended to be executed in case of incompatibility between an indicator of type associated with a user agent that issued said invitation message, on the one hand, and an indicator of type associated with a destination user agent receiving said invitation message, on the other hand.

7. System for transmitting data between at least two heterogeneous nodes, that is to say using protocols of different types, pure IPv4, pure IPv6 or dual-stack, including means for inserting, into at least one message transmitted by a user agent included in one of said nodes before establishment of a communication session between said nodes, an indicator of type representative of the type, pure IPv4, pure IPv6 or dual-stack, of at least one address associated with this user agent, said system being **characterized in that** said indicator of type is inserted into a field called "CONTACT" included in an SIP request.

8. Transmission system according to Claim 7, **characterized in that** it furthermore includes means for sorting and classifying user agents issuing request messages on the basis of the indicators of type of said agents, and a database intended to store said classification.

9. System according to Claim 8, **characterized in that** it furthermore includes means for comparing indicators of types specific to at least one calling user agent and to at least one called user agent.

10. Computer program including at least one series of program code instructions for the execution of the steps of a method in accordance with one of Claims 1 to 6 when said program is executed on a computer.

11. Terminal forming a node of a system for transmitting data, including means for inserting, into at least one message transmitted by a user agent included in said node, an indicator of type representative of the type, pure IPv4, pure IPv6 or dual-stack, of at least one address associated with this user agent, said terminal being **characterized in that** said indicator of type is inserted into a field called "CONTACT" included in an SIP request message.
